# EUROPEAN PATENT APPLICATION

(11) **EP 4 793 508 A1**
(43) Date of publication of application: **19.08.2026**
(21) Application number: 25224376.1
(22) Date of filing: 17.12.2025
(51) Int. Cl.: F04D 19/00, F04D 29/60

(54) **FAN MOUNTING ASSEMBLY AND POWER DEVICE**

(30) Priority: 17.02.2025 CN 202520247669 U
(71) Applicant: Sungrow Power Supply Co., Ltd., Hefei, Anhui 230088 (CN)
(72) Inventor: LIANG, Chao, Hefei (CN); ZHANG, Yayun, Hefei (CN); PAN, Hanfei, Hefei (CN); PAN, Zhiyuan, Hefei (CN); WANG, Xiaohu, Hefei (CN); ZENG, Xuliang, Hefei (CN); WANG, Zhou, Hefei (CN)
(74) Representative: Zacco Norway AS

(57) **Abstract**

The present application provides a fan mounting assembly and a power device, and the fan mounting assembly includes a mounting bracket and a fan support. The mounting bracket is arranged on a side of the power device; and the fan support is connected to the fan and secured to the mounting bracket by means of a detachable connection structure. The detachable connection structure includes a limiting structure and a locking structure, and the limiting structure is configured to restrict the fan support from moving relative to the mounting bracket in a first direction. The mounting bracket has a supporting surface for supporting the fan support, and the first direction is perpendicular to the supporting surface. The locking structure is configured to lock the fan support to the mounting bracket on a side of the mounting bracket away from the power device. Since the locking structure is located on the side of the mounting bracket away from the power device, the operation space is more sufficient and it is more convenient to operate the locking structure, and the detached fan support is located in a relatively spacious place, so it may be more convenient for the disassembly and assembly as well as maintenance of the fan.

## Description

### FIELD

The present application relates to the technical field of mounting and maintenance of power devices, and in particular to a fan mounting assembly and a power device.

### BACKGROUND

A power device (such as an air-cooled transformer) is generally provided with a fan device, which can accelerate heat dissipation through forced convection and further ensures the power device to operate within a safe temperature range. However, the fan in the related technology is typically mounted on the power device by means of a complex mounting structure, so it is very time-consuming and inconvenient for disassembling, assembling, or maintaining the fan.

In summary, how to solve the problem of inconvenient disassembly and assembly, as well as maintenance of the fan has become an urgent technical problem to be solved by those skilled in the art.

### SUMMARY

In view of this, an object of the present application is to provide a fan mounting assembly and a power device, so as to solve the problem of inconvenient disassembly and assembly, as well as maintenance of the fan.

To achieve the above object, following technical solutions are provided according to an aspect of the present application.

A fan mounting assembly for mounting a fan to a power device includes a mounting bracket and a fan support,
the mounting bracket arranged on one side of the power device;
the fan support connected to the fan and secured to the mounting bracket by means of a detachable connection structure;
the detachable connection structure includes a limiting structure and a locking structure, the limiting structure is configured to restrict the fan support from moving relative to the mounting bracket in a first direction, the mounting bracket has a supporting surface for supporting the fan support, and the first direction is perpendicular to the supporting surface. The locking structure is configured to lock the fan support to the mounting bracket on a side of the mounting bracket far away from the power device.

In some embodiments of the present application, the limiting structure includes a first limiting component and a second limiting component. The first limiting component is arranged on the mounting bracket and located on a side of the mounting bracket close to the power device, and the second limiting component is arranged on the fan support and matched with the first limiting component so as to limit the second limiting component from moving relative to the first limiting component in the first direction.

In some embodiments of the present application, a limiting plate is provided on the side of the mounting bracket close to the power device, and the first limiting component is a limiting recess in the limiting plate; and the second limiting component is a limiting protrusion on the fan support.

In some embodiments of the present application, the mounting bracket is further provided with flanges on a left side and a right side thereof in a second direction respectively, and the flanges on the left side and the right side match to a left side and a right side of the fan support in the second direction;
the second direction is parallel to the supporting surface and close to or away from the power device.

In some embodiments of the present application, the locking structure includes: a first fastening hole, a second fastening hole, and a fastener. The first fastening hole forms on the mounting bracket, the second fastening hole forms on the fan support and aligned with the first fastening hole, and the fastener is configured to connect and secure the first fastening hole and the second fastening hole.

In some embodiments of the present application, the locking structure includes a first buckle and a second buckle match to the first buckle. The first buckle is arranged on the mounting bracket, and the second buckle is arranged on the fan support.

In some embodiments of the present application, the fan support is in sliding fit with the mounting support in the second direction.

The second direction is parallel to the supporting surface and close to or away from the power device.

In some embodiments of the present application, the mounting bracket is provided with sliding rails on the left side and the right side thereof in the second direction, and the fan support is slidably arranged on the sliding rails.

In some embodiments of the present application, each of the slide rails is a telescopic guide rail, and the fan support is arranged at an end of the telescopic guide rail.

In some embodiments of the present application, the fan support is provided with a lifting handle.

In some embodiments of the present application, the fan support forms a first support opening aligned with an air inlet of the fan, and the mounting bracket forms a second bracket opening corresponding to the first support opening.

In some embodiments of the present application, the second support opening is a polygonal opening provided in a middle portion of the supporting surface, and an edge of the polygonal opening is folded toward a side of the mounting bracket facing away from the first support opening.

In some embodiments of the present application, the mounting bracket includes a bracket body, a fixing connector and a supporting connector that are arranged on the bracket body. The bracket body is connected to the power device by means of the fixing connector and the supporting connector.

In order to solve the problem of inconvenient disassembly and assembly as well as maintenance of the fan, the fan mounting assembly provided in the present application is configured for mounting the fan to the power device, and includes the mounting bracket and the fan support. The mounting bracket is arranged on one side of the power device, and the fan support is connected to the fan and fixed to the mounting support by means of the detachable connection structure. The detachable connection structure includes the limiting structure and the locking structure, the limiting structure is used to restrict the fan support from moving relative to the mounting bracket in the first direction, the mounting bracket has the supporting surface for supporting the fan support, and the first direction is perpendicular to the supporting surface. The locking structure is configured to lock the fan support to the mounting bracket on a side of the mounting bracket away from the power device.

In the practical application, since the mounting bracket is fixed to a side of the power device, the fan support connected to the fan is secured to the mounting bracket by means of the detachable connection structure. The fan support is restricted from moving relative to the mounting bracket in the first direction by the limiting structure, and is locked on the side of the mounting bracket away from the power device by the locking structure. When the fan needs to be disassembled, assembled or maintained, the fan support with the fan can be detached outward from the mounting bracket only by unlocking the locking structure. Since the locking structure is located on the side of the mounting bracket away from the power device, the operation space is more sufficient and the locking structure can be operated more convenient. The detached fan support is located in a relatively spacious place, so it may be more convenient for disassembling and assembling, or maintaining the fan.

On the other hand, a power device is further provided according to an embodiment of the present application, and it includes a fan and the fan mounting assembly in any of the above solutions. Since the fan mounting assembly has the above technical effects, the power device including the fan mounting assembly should also have corresponding technical effects, which will not be described in detail herein.

In some embodiments of the present application, the power device is an air-cooled transformer having a heat dissipation structure, and an air outlet of the fan faces the heat dissipation structure.

The technical features mentioned above, the technical features to be mentioned below, and the technical features separately shown in the accompanying drawings may be arbitrarily combined with each other as long as the combined technical features are not contradictory to each other. All possible combinations of features are those expressly recited herein. Any of the multiple sub-features included in the same statement may be applied independently without necessarily being applied together with other sub-features.

### BRIEF DESCRIPTION OF THE DRAWINGS

In order to more clearly illustrate the technical solutions in the embodiments of the present application or in the conventional technology, the accompanying drawings required in the description of the embodiments or the conventional technology will be briefly described below. Obviously, the accompanying drawings in the following description are merely some embodiments of the present application, and other drawings may be obtained by those skilled in the art based on these accompanying drawings without creative efforts.
FIG. 1 is a schematic structural view of a mounting bracket according to an embodiment of the present application;
FIG. 2 is a schematic exploded structural view of a fan and a fan support according to an embodiment of the present application;
FIG. 3 is a schematic exploded structural view of a fan support carrying a fan and a mounting bracket arranged on a power device according to an embodiment of the present application;
FIG. 4 is a schematic structural view of a fan mounted on a power device by means of a fan mounting assembly according to an embodiment of the present application in a first perspective;
FIG. 5 is a schematic structural view of a fan mounted on a power device by means of a fan mounting assembly according to an embodiment of the present application in a second perspective;
FIG. 6 is a schematic structural view of a sliding rail arranged on a mounting bracket according to an embodiment of the present application;
FIG. 7 is a schematic structural view of a fan support with a fan being detached from a mounting bracket according to an embodiment of the present application.

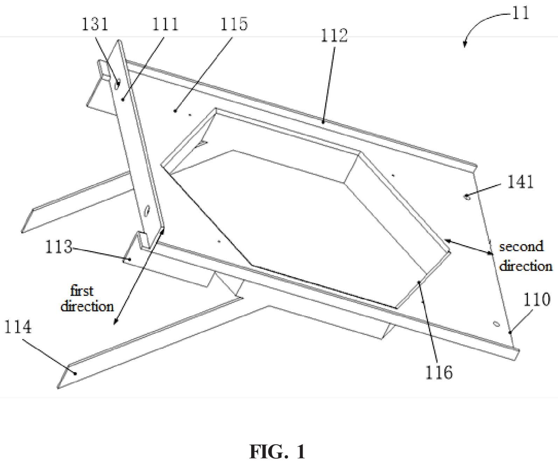

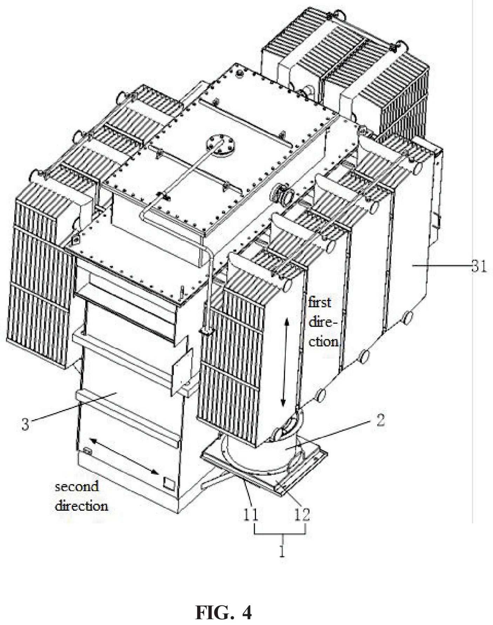

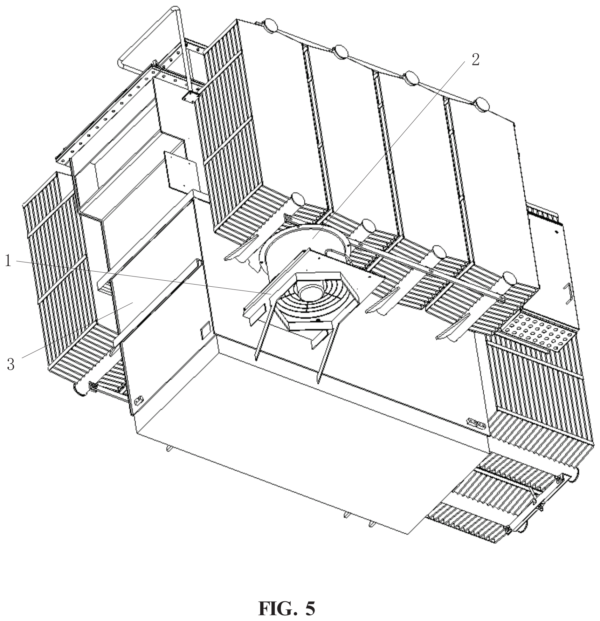

Reference numerals in FIG. 1 to FIG. 7 are explained as follows:

| | | | |
|---|---|---|---|
| 1. | fan mounting assembly; | 11. | mounting bracket; |
| 110. | bracket body; | 111. | limiting plate; |
| 112. | flange; | 113. | fixing connector; |
| 114. | supporting connector; | 115. | supporting surface; |
| 116. | second bracket opening; | 12. | fan support; |
| 120. | first support opening; | 121. | lifting handle; |
| 13. | limiting structure; | 131. | first limiting component; |
| 132. | second limiting component; | 14. | locking structure; |
| 141. | first fastening hole; | 142. | second fastening hole; |
| 15. | slide rail; | 2. | fan; |
| 3. | power device; | 31. | heat dissipation structure. |

### DETAILED DESCRIPTION OF THE EMBODIMENTS

A core of the present application is to provide a fan mounting assembly and a power device to solve the problem of inconvenient disassembly and assembly as well as maintenance of a fan.

The technical solutions in the embodiments of the present application will be described clearly and completely below with reference to the accompanying drawings in the embodiments of the present application. Apparently, the described embodiments are only some embodiments rather than all the embodiments of the present application. Based on the embodiments of the present application, all other embodiments obtained by those skilled in the art without creative efforts shall fall within the protection scope of the present application.

In the related technology, a fan is usually mounted on a power device by means of a complex mounting structure, and the power device is usually mounted within a narrow space, such as within an indoor or outdoor cabinet in a substation. The fan is usually secured to the power device by many fasteners, some of the fasteners may be blocked by a mechanism of the power device, and it is difficult for a disassembly and assembly tool to insert into the narrow space, so it is time-consuming and inconvenient for disassembling, assembling as well as maintaining the fan.

Based on this, referring to FIG. 1 to FIG. 5, a fan mounting assembly 1 for mounting a fan 2 to a power device 3 is provided according to an aspect of the present application. Specifically, the fan mounting assembly 1 includes a mounting bracket 11 and a fan support 12. The mounting bracket 11 is arranged on one side of the power device 3, specifically, it may be arranged on a top side of the power device 3 or any of the surrounding sides of the power device 3. The mounting bracket 11 serves as a connection link or bridge between the fan support 12 and the power device 3, specifically, it may be directly welded and fixed on the side of the power device 3, or it may be detachably secured on the side of the power device 3, for example, it is connected to the side of the power device 3 by a fastener. In practical application, the mounting bracket 11 can be arranged based on actual needs, which is not specifically limited herein. The fan support 12 is connected to the fan 2, it is mainly used to carry and secure the fan 2, and it is secured to the mounting bracket 11 by means of a detachable connection structure. The fan 2 is mainly used to perform forced air cooling on a heat dissipation structure on the power device 3. Specifically, the fan 2 may be integrated with the fan support 12, for example, the fan support 12 itself forms a fan frame of the fan 2, or the fan 2 and the fan support 12 are designed as separate and fixedly connected structures, for example, they may be secured to each other by a fastener or other detachable connection component, which is not more specifically limited herein.

In addition, referring to FIG. 1 to FIG. 3, the detachable connection structure specifically includes a limiting structure 13 and a locking structure 14. The limiting structure 13 is mainly configured to restrict the fan support 12 from moving relative to the mounting bracket 11 in a first direction. The mounting bracket 11 has a supporting surface 115 for supporting the fan support 12, and the first direction is perpendicular to the supporting surface 115. For example, when the fan support 12 is arranged on the side of the power device 3 and the supporting surface 115 of the mounting bracket 11 faces upward relative to the fan support 12, the first direction specifically refers to a vertical direction. The locking structure 14 is mainly used to lock the fan support 12 to the mounting bracket 11 on a side of the mounting bracket 11 away from the power device 3, and the side away from the power device 3 here is defined with respect to the side where the mounting bracket 11 is connected to the power device 3.

In actual application of the fan mounting assembly 1, since the mounting bracket 11 is fixed to one side of the power device 3, the fan support 12 connected to the fan 2 is secured to the mounting bracket 11 by means of the detachable connection structure. The fan support 12 is restricted from moving relative to the mounting bracket 11 in the first direction by the limiting structure 13, and it is locked on the side of the mounting bracket 11 away from the power device 3 by the locking structure 14. When the fan 2 is required to be disassembled, assembled and maintained, the fan support 12 with the fan 2 can be detached outward from the mounting bracket 11 only by unlocking the locking structure 14. Because the locking structure 14 is located on the side of the mounting bracket away from the power device 3, the operation space is more sufficient and it is more convenient to operate the locking structure 14. The detached fan support 12 is located in a relatively spacious place, so that it is more convenient for disassembling, assembling as well as maintaining the fan 2, thereby greatly improving the convenience of disassembly and assembly as well as maintenance of the fan.

It should be noted that the above power device 3 may be specifically an air-cooled transformer. Especially when the air-cooled transformer is applied onto an integrated machine for photovoltaic power generation and/or energy storage, the air-cooled transformer operates at high temperature and a long-term high load, which leads to a longer operation time of the fan 2 and a worse use scenario, so that the fan 2 needs to be replaced and maintained at a higher frequency. By adopting the fan mounting assembly, the disassembly and assembly as well as maintenance requirements of the fan 2 arranged on the air-cooled transformer can be better met. Of course, it can be understood that the above power device 3 may also be other power devices with air-cooling requirements except the air-cooled transformer, which is not more specifically limited herein.

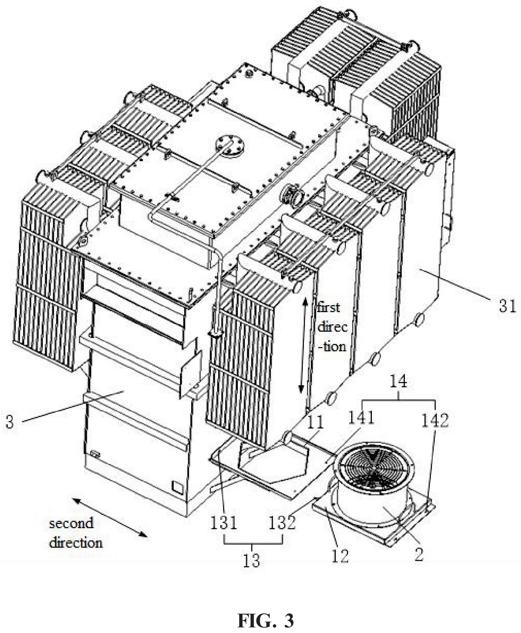

In some specific embodiments, referring to FIG. 3, the limiting structure 13 specifically includes a first limiting component 131 and a second limiting component 132. The first limiting component 131 is arranged on the mounting bracket 11 and located on a side of the mounting bracket 11 close to the power device 3, and the second limiting component 132 is arranged on the fan support 12 and adapted to the first limiting component 131, so as to restrict the second limiting component 132 from moving relative to the first limiting component 131 in the first direction. By designing the limiting structure 13 into the above structural form, one side of the fan support 12 close to the power device 3 is limited by the limiting structure 13 in the first direction, and one side of the fan support 12 away from the power device 3 is locked by the locking structure 14, so that two opposite sides of the fan support 12 are both secured to the mounting bracket 11, and the fan 2 is more stably and reliably secured.

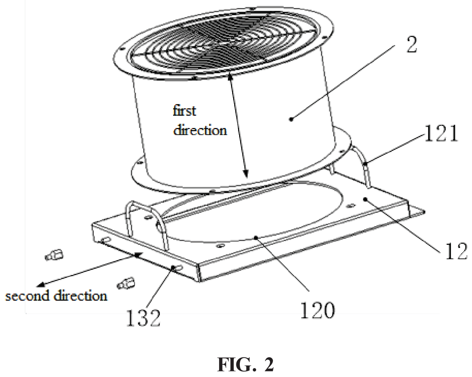

In a further embodiment, referring to FIG. 1 and FIG. 2, a limiting plate 111 may be specifically provided on the side of the mounting bracket 11 close to the power device 3, and the limiting plate 111 may be specifically formed by flanging an edge of the side of the mounting bracket 11 close to the power device 3 in the first direction toward a mounting side (that is, the side where the supporting surface 115 is located) of the fan support 12, or it may be an additional welded limiting plate component, which is not specifically limited herein. The first limiting component 131 may be specifically formed as a limiting groove (such as a limiting hole) in the limiting plate 111, and the second limiting component 132 may be formed as a limiting protrusion (such as a limiting pin) on the fan support 12. Through the cooperation of the limiting protrusion and the limiting groove, the structure of the limiting structure is simpler, and more convenient to be assembled and disassembled. In addition, multiple limiting grooves and multiple limiting protrusions can be provided, and the number of the limiting groove and the number of the limiting protrusions are not limited, and the specific structure can be selected based on actual requirements.

It should be noted that providing the limiting groove on the mounting bracket 11 and providing the limiting protrusion on the fan support 12 is merely an example of the first limiting component 131 and the second limiting component 132 in the embodiment of the present application. In the actual application, the limiting protrusion may be provided on the mounting bracket 11, and the limiting groove may be formed on the fan support 12. Alternatively, the first limiting component 131 and the second limiting component 132 are designed as other limiting structure rather than the limiting protrusion and the limiting hole. For example, one of the mounting bracket 11 and the fan support 12 is provided with a limiting stopper, and the other of the mounting bracket 11 and the fan support 12 is provided with an insertion part cooperated with the limiting stopper. In an actual application, they can be designed based on actual requirements, which is not more specifically limited herein.

In some other specific embodiments, referring to FIG. 1 and FIG. 2, the mounting bracket 11 is provided with flanges 112 respectively on a left side and a right side thereof in a second direction, and the flanges 112 on the left side and the right side of the mounting bracket 11 respectively match to a left side and a right side of the fan support 12 in the second direction. The flanges 112 may specifically be formed by folding each of a left edge and a right edge of the mounting bracket 11 in the second direction, or may be formed by additionally welding a baffle, which is not specifically limited herein. Through the structure of the flanges 112, after the fan support 12 is mounted to the mounting bracket 11, the mounting bracket 11 can limit the left and right sides of the fan support 12 by means of the flanges 112 on the left and right sides thereof, so that the fan support 12 can be more stably mounted and secured relative to the mounting bracket 11. It should be noted that, referring to FIG. 1 to FIG. 3, the second direction is specifically a direction that is parallel to the supporting surface 115 and close to or away from the power device 3. For example, when the mounting bracket 11 is arranged on any of the surrounding sides of the power device 3, the left and right sides of the mounting bracket 11 in the second direction specifically refer to the left and right sides of an user when the user faces the side of the power device 3 where the mounting bracket 11 is located.

In some other specific embodiments, referring to FIG. 3, the locking structure 14 may specifically include a first fastening hole 141, a second fastening hole 142, and a fastener. The first fastening hole 141 is formed in the mounting bracket 11, and it may be specifically located at an edge of the side of the mounting bracket 11 away from the power device 3. The second fastening hole 142 is formed in the fan support 12 and aligned with the first fastening hole 141, and it may be specifically located at an edge of the side of the fan support 12 away from the power device 3. The fastener is used to connect and secure the first fastening hole 141 and the second fastening hole 142. By designing the locking structure 14 as the above structural form, the locking structure 14 is not only simple in structure and low in cost, but also is stable.

It should be noted that, in order to shorten the length of the fastener as much as possible, the corresponding edge of fan support 12 with the second fastening hole 142 may be formed into a thin edge that fits and contacts the edge of the mounting bracket 11.

Of course, it can be understood that the above locking structure 14 including the first fastening hole 141, the second fastening hole 142 and the fastener is merely an example of the embodiment of the present application. In the actual application, the locking structure 14 can be designed in other form of locking structure. For example, alternatively, the locking structure 14 may include a first buckle and a second buckle matched with the first buckle. The first buckle is arranged on the mounting bracket 11, and the second buckle is arranged on the fan bracket 12. By designing the locking structure 14 in the form of a snap-fit connection, the disassembly and assembly operation can be carried out without a tool to achieve locking and unlocking, and the operation is more convenient.

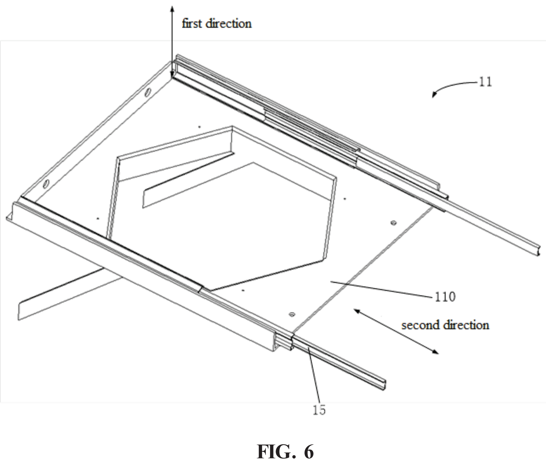

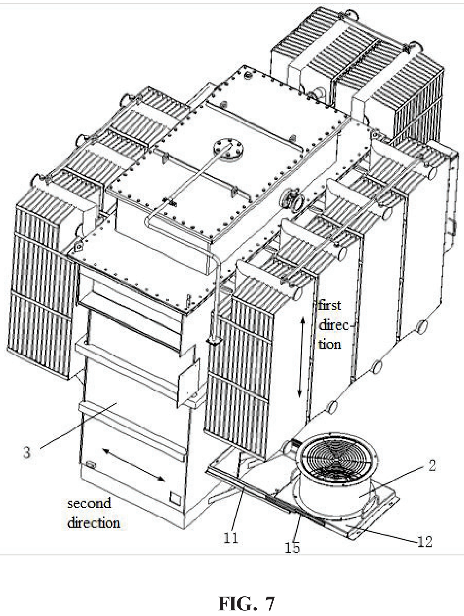

In some specific embodiments, referring to FIG. 6 and FIG. 7, and in conjunction with FIG. 1 and FIG. 3, the fan support 12 and the mounting bracket 11 may be specifically in a sliding fit in a second direction. The second direction is a direction that is parallel to the supporting surface 115 and close to or away from the power device 3, and the second direction is perpendicular to the first direction. By designing the fan support 12 and the mounting bracket 11 in the above structural forms, when the fan support 12 is mounted to the mounting bracket 11, the fan support 12 can be first placed on the mounting bracket 11 and slide to the limiting structure 13 in the second direction to realize cooperation with limitation, and then the fan support 12 is locked to the mounting bracket 11 by the locking structure 14 on the side of the mounting bracket 11 away from the power device 3, so that the operation is more convenient.

In a further embodiment, referring to FIG. 6, the mounting bracket 11 may be provided with sliding rails 15 on the left and right sides thereof in the second direction respectively, and the fan support 12 is slidably arranged on the sliding rails 15. For example, the fan support 12 may be designed with a slider or a roller. By designing the sliding rails 15, the sliding fit between the mounting bracket 11 and the fan support 12 is smoother. Of course, it can be understood that the fan support 12 may be designed with sliding rails on the left and right sides thereof in the second direction respectively, and the mounting bracket 11 is provided with a sliding groove or a roller matched with the sliding rails. In an actual application, the fan support 12 and the mounting bracket 11 can be set based on requirements, which is not specifically limited herein.

In a further embodiment, each sliding rail 15 may specifically be a telescopic guide rail, which is similar to a telescopic guide rail structure used in a drawer. The telescopic guide rail has at least two guide rails, which are nested step by step and are in sliding fit, and the fan support 12 is arranged at an end of the telescopic guide rail, that is, at an end of the last-stage guide rail. By designing the sliding rail 15 in the above structure form, when the fan 2 is disassembled, assembled or maintained, the locking structure 14 is unlocked, the fan support 12 is pulled outward from the mounting bracket 11, and under the action of the telescopic guide rail, the fan support 12 will be away from the power device 3, and the fan 2 is exposed in a relatively spacious place, so that the fan 2 can be detached from or mounted on the fan support 12 more conveniently.

In some other specific embodiments, as shown in FIG. 2, the fan support 12 may further be provided with a lifting handle 121, and the structure form of which may be specifically but not limited to a U-shaped handle. Specifically, there may be two lifting handles 121, which are respectively arranged on one side of the fan support 12 close to the power device 3 and one side of the fan support 12 away from the power device 3. When the fan support 12 is designed to be in sliding fit with the mounting bracket 11 in the second direction, the fan support 12 can be pulled out from the mounting bracket 11 by the lifting handle 121 on the side of the fan support 12 away from the power device 3, and it is more convenient to move the fan support 12 by means of the two lifting handles 121 after the fan support 12 has been pulled out.

It should be noted that, referring to FIG. 1 and FIG. 2, the fan support 12 may be specifically formed with a first support opening 120 aligned with an air inlet of the fan 2, so as to avoid affecting the normal air intake of the fan 2. Similarly, the corresponding mounting bracket 11 forms a second bracket opening 116 corresponding to the first support opening 120. That is, after the mounting bracket 11 and the fan support 12 are cooperated in place, the first support opening 120 is aligned with the second bracket opening 116, so as to ensure the fan 2 to normally intake air.

In a further embodiment, referring to FIG. 1, the second bracket opening 116 may specifically be a polygonal opening provided in a middle portion of the supporting surface 115, and an edge of the polygonal opening are folded toward a side of the mounting bracket 11 facing away from the first support opening 120. This structure can not only meets the design of the second bracket opening 116, but also enhance the bearing strength of the mounting bracket 11 to a certain extent by folding the edge of the polygonal opening toward the side of the mounting bracket 11 facing away from the first support opening 120. Of course, it can be understood that the second bracket opening 111 may also be designed in other shapes, such as a circular shape.

In some other specific embodiments, referring to FIG. 1, the mounting bracket 11 may specifically include a bracket body 110, a fixing connector 113 and a supporting connector 114 that are arranged on the bracket body 110. The bracket body 110 is connected to the power device 3 by means of the fixing connector 113 and the supporting connector 114, and the connection may be, but is not limited to, a welding connection. The fixing connector 113 may specifically be a reinforcing corner member designed at a bottom of the bracket body 110, and the supporting connector 114 may specifically be an inclined supporting reinforcement member designed at the bottom of the bracket body 110. By designing the mounting bracket 11 in the above structural form, the connection between the mounting bracket 11 and the power device 3 is more stable and reliable.

Referring to FIG. 3 to FIG. 5 and FIG. 7, a power device 3 is further provided according to another aspect of the present application, including a fan 2 and a fan mounting assembly 1. The fan 2 is mainly used to perform forced air cooling on the power device 3, the fan mounting assembly 1 is mainly configured for mounting the fan 2 to the power device 3, and the fan mounting assembly 1 is the fan mounting assembly 1 described in any of the above solutions. Since the fan mounting assembly 1 has the above technical effects, the power device 3 including the fan mounting assembly 1 should also have the corresponding technical effects, which will not be described in detail herein.

In a further embodiment, referring to FIG. 3 to FIG. 5 and FIG. 7, the power device 3 may be specifically an air-cooled transformer having a heat dissipation structure 31, and an air outlet of the fan 2 faces the heat dissipation structure to perform forced air cooling on the heat dissipation structure. Specifically, the air-cooled transformer may be specifically an oil-immersed transformer, and the mounting bracket 11 of the fan mounting assembly 1 may be specifically arranged on a wall of an oil tank of the air-cooled transformer. Of course, it can be understood that the power device 3 may alternatively be other power devices with air cooling requirements except the air-cooled transformer, which is not specifically limited herein.

It should be noted that, the above embodiments in this specification are described in a progressive manner. Each of the embodiments is mainly focused on describing the differences from other embodiments, and references may be made among these embodiments with respect to the same or similar portions among these embodiments.

As shown in the present application and the claims, unless the context clearly indicates an exception, the words "one", "a", "the" and/or "this" do not specifically refer to the singular, but may also include the plural. Generally, the terms "include" and "comprise" only indicate that the steps and elements that have been clearly identified are included, and these steps and elements do not constitute an exclusive list, and the method or device may also include other steps or elements. The elements defined by the sentence "include a..." do not exclude the existence of other identical elements in the process, method, product or device that includes the elements.

In the description of the embodiments of the present application, unless otherwise specified, "/" means or, for example, A/B can mean A or B. The "and/or" herein is only used to describe an association relationship between associated objects, which means that there may be three kinds of relationships. For example, A and/or B may mean that there are three cases, such as A exists alone, A and B exist at the same time, and B exists alone. In addition, in the description of the embodiments of the present application, "multiple" refers to two or more.

Although specific embodiments are described for explaining the principle and implementation of the present application, the description of the embodiments is only used to help understand the core idea of the present application. It should be pointed out that, without departing from the principles of the present application, several improvements and modifications to the present application can be made by those skilled in the art, and these improvements and modifications shall fall within the protection scope of the claims of the present application.

## Claims

1. A fan mounting assembly for mounting a fan (2) to a power device (3), comprising:
a mounting bracket (11) arranged on a side of the power device (3);
a fan support (12) connected to the fan (2) and secured to the mounting support (11) by means of a detachable connection structure;
wherein the detachable connection structure comprises a limiting structure (13) and a locking structure (14); the limiting structure (13) is configured to restrict the fan support (12) from moving relative to the mounting bracket (11) in a first direction, the mounting bracket (11) has a supporting surface (115) for supporting the fan support (12), the first direction is perpendicular to the supporting surface (115); and the locking structure (14) is configured to lock the fan support (12) to the mounting bracket (11) on a side of the mounting bracket (11) away from the power device (3).

2. The fan mounting assembly according to claim 1, wherein the limiting structure (13) comprises a first limiting component(131) and a second limiting component (132); the first limiting component (131) is arranged on the mounting bracket (11) and located on a side of the mounting bracket (11) close to the power device (3), and the second limiting component (132) is arranged on the fan support (12) and matched with the first limiting component (131) so as to limit the second limiting component (132) from moving relative to the first limiting component (131) in the first direction.

3. The fan mounting assembly according to claim 2, wherein a limiting plate (111) is provided on the side of the mounting bracket (11) close to the power device (3), and the first limiting component (131) is a limiting recess in the limiting plate (111); and the second limiting component (132) is a limiting protrusion on the fan support (12).

4. The fan mounting assembly according to claim 1, wherein the mounting bracket (11) is further provided with flanges (112) respectively on a left side and a right side thereof in a second direction, and the flanges (112) on the left side and the right side of the mounting bracket (11) respectively match to a left side and a right side of the fan support (12) in the second direction;
the second direction is parallel to the supporting surface (115) and close to or away from the power device (3).

5. The fan mounting assembly according to claim 1, wherein the locking structure (14) comprises a first fastening hole (141), a second fastening hole (142) and a fastener; the first fastening hole (141) forms on the mounting bracket (11), the second fastening hole (142) forms in the fan support (12) and aligned with the first fastening hole (141), and the fastener is configured to connect and secure the first fastening hole (141) and the second fastening hole (142).

6. The fan mounting assembly according to claim 1, wherein the locking structure (14) comprises a first buckle and a second buckle matched to the first buckle; the first buckle is arranged on the mounting bracket (11), and the second buckle is arranged on the fan support (12).

7. The fan mounting assembly according to claim 1, wherein the fan support (12) is in sliding fit with the mounting bracket (11) in a second direction;
the second direction is parallel to the supporting surface (115) and close to or away from the power device (3).

8. The fan mounting assembly according to claim 7, wherein the mounting bracket (11) are provided with sliding rails (15) on a left side and a right side thereof in the second direction, and the fan support (12) is slidably arranged on the sliding rails (15).

9. The fan mounting assembly according to claim 8, wherein each of the sliding rails (15) is configured as a telescopic guide rail, and the fan support (12) is arranged at an end of the telescopic guide rail.

10. The fan mounting assembly according to claim 1, wherein the fan support (12) is provided with a lifting handle (121).

11. The fan mounting assembly according to claim 1, wherein the fan support (12) forms a first support opening (120) aligned with an air inlet of the fan (2), and the mounting bracket (11) forms a second bracket opening corresponding to the first support opening (120).

12. The fan mounting assembly according to claim 11, wherein the second bracket opening (116) is a polygonal opening provided in a middle portion of the supporting surface (115), and an edge of the polygonal opening is folded toward a side of the mounting bracket (11) facing away from the first support opening (120).

13. The fan mounting assembly according to claim 1, wherein the mounting bracket (11) comprises a bracket body (110), a fixing connector (113) and a supporting connector (114) that are arranged on the bracket body (110); and the bracket body (110) is connected to the power device (3) by means of the fixing connector (113) and the supporting connector (114).

14. A power device, comprising a fan (2) and the fan mounting assembly (1) according to any one of claims 1 to 13.

15. The power device according to claim 14, wherein the power device (3) is an air-cooled transformer having a heat dissipation structure (31), and an air outlet of the fan faces the heat dissipation structure.
